# EUROPÄISCHE PATENTANMELDUNG

(11) **EP 3 217 102 A1**
(43) Veröffentlichungstag der Anmeldung: **13.09.2017**
(21) Anmeldenummer: 17152892.0
(22) Anmeldetag: 24.01.2017
(51) Int. Cl.: F24D 3/14

(54) **WÄRMETAUSCHERVORRICHTUNG**

(30) Priorität: 10.03.2016 AT 1292016
(71) Anmelder: Lenz, Bernhard, 6858 Schwarzach (AT)
(72) Erfinder: Lenz, Bernhard, 6858 Schwarzach (AT); Bösch, Christian, 6890 Lustenau (AT)
(74) Vertreter: Fechner, Thomas

(57) **Zusammenfassung**

Wärmetauschervorrichtung (1) mit einer ersten Deckplatte (2) und zumindest einer zweiten Deckplatte (3), wobei zwischen den Deckplatten (2, 3) zumindest ein Wärmetauscherrohr (4) mit einer Rohrwandung (5) angeordnet ist, wobei die Rohrwandung (5) des Wärmetauscherrohrs (4) auf zumindest einer Seite (6), welche einer der Deckplatten (2, 3) zugewandt ist, einen in seiner Form an die Deckplatte (2, 3) angepassten Oberflächenbereich (7) aufweist, welcher flächig, vorzugsweise direkt, an der Deckplatte (2, 3) anliegt.

## Beschreibung

Die vorliegende Erfindung betrifft eine Wärmetauschervorrichtung mit einer ersten Deckplatte und zumindest einer zweiten Deckplatte, wobei zwischen den Deckplatten zumindest ein Wärmetauscherrohr mit einer Rohrwandung angeordnet ist. Darüber hinaus betrifft die Erfindung auch ein Verfahren zur Herstellung einer Wärmetauschervorrichtung.

Wärmetauschervorrichtungen der oben genannten Art sind z.B. in der DE 102 30 296 A1 gezeigt. Dort befindet sich zwischen den beiden Deckplatten eine Trägerplatte die z.B. aus Polystyrol, Polyurethan oder Polypropylenschäumen bestehen kann. Diese Trägerplatte weist Ausnehmungen auf, in die die Wärmetauscherrohre eingelegt werden. Die Deckplatten werden an der Trägerplatte festgeklebt, wobei auch zwischen den Deckplatten und dem Wärmetauscherrohr eine dünne Klebstoffschicht verbleiben kann.

Die Aufgabe der Erfindung ist es, eine Wärmetauschervorrichtung der oben genannten Art mit verbessertem Wärmeübergang zwischen der Deckplatte und dem Wärmetauscherrohr vorzuschlagen.

Zur Lösung dieser Aufgabe sieht die erfindungsgemäße Wärmetauschervorrichtung vor, dass die Rohrwandung des Wärmetauscherrohrs auf zumindest einer Seite, welche einer der Deckplatten zugewandt ist, einen in seiner Form an die Deckplatte angepassten Oberflächenbereich aufweist, welcher flächig, vorzugsweise direkt, an der Deckplatte anliegt.

Durch den an die Form der Deckplatte angepassten Oberflächenbereich der Rohrwandung des Wärmetauscherrohres kommt es zu einer flächigen Anlage der Deckplatte auf dem Wärmetauscherrohr und damit zu einem verbesserten Wärmeübergang aufgrund der größeren Übertragungsfläche. Im Gegensatz zu dem beim Stand der Technik bekannten linienförmigen Kontakt zwischen der Rohrwandung und der Deckplatte kommt es aufgrund der Erfindung zu einem flächigen Anliegen des genannten angepassten Oberflächenbereichs der Rohrwandung an der Deckplatte. Es kann dabei vorgesehen sein, dass die Rohrwandung des Wärmetauscherrohrs auf einander gegenüberliegenden Seiten, welche jeweils der Deckplatte zugewandt sind, jeweils einen in seiner Form an die Deckplatte angepassten Oberflächenbereich aufweist, wobei beide dieser angepassten Oberflächenbereiche jeweils flächig, vorzugsweise direkt, an der Deckplatte anliegen. Es ist aber genauso gut möglich, dass ein solcher angepasster Oberflächenbereich nur auf einer Seite, welche einer der Deckplatten zugewandt ist, realisiert wird. Z.B. kann auf einer den angepassten Oberflächenbereichen entgegengesetzten Seite der Rohrwandung auch eine Isolierschicht vorgesehen sein, um den Wärmeübergang zwischen der Rohrwandung und der auf der anderen Seite dieser Isolierschicht vorhandenen Deckplatte zu erschweren bzw. zu verhindern. Das Wärmetauscherrohr kann mäanderförmig oder auch in anderen Ausgestaltungsformen zwischen den Deckplatten angeordnet sein. Es können natürlich auch mehrere Wärmetauscherrohre in diesem Zwischenraum zwischen den Deckplatten vorhanden sein, wobei diese günstigerweise alle erfindungsgemäß ausgebildet sind. Die erfindungsgemäße Wärmetauschervorrichtung könnte auch als Wärmetauscherkassette bezeichnet werden. Durch die Wärmetauscherrohre wird in der Regel eine Wärmeträgerflüssigkeit hindurchgeführt. Die Deckplatten können als massive in sich starre Platten aber auch als bewegliche Bleche oder dergleichen ausgestaltet sein. Ohne andere Materialien wie z.B. Kunststoff grundsätzlich auszuschließen, handelt es sich bei den Deckplatten bevorzugt um Metallplatten z.B. aus Aluminium, Kupfer oder Stahl. Auch die Rohrwandungen der Wärmetauscherrohre können aus verschiedensten Materialien, z.B. auch aus Kunststoff, hergestellt werden. Bevorzugt bestehen die Rohrwandungen aber ebenfalls aus Metall, z.B. ebenfalls aus Alu, Kupfer oder Stahl.

Grundsätzlich ist es im Sinne der flächigen Anlage erfindungsgemäß vorgesehen, dass der angepasste Oberflächenbereich des Wärmetauscherrohrs und der Bereich der Deckplatte, an dem dieser anliegt, dieselbe Form aufweisen. Dabei kommen grundsätzlich auch diverse gekrümmte oder anders ausgestaltete Oberflächenformen in Frage. Besonders bevorzugte Ausgestaltungsformen sehen jedoch vor, dass der angepasste Oberflächenbereich der Rohrwandung und ein Bereich der Deckplatte, an dem dieser angepasste Oberflächenbereich der Rohrwandung anliegt, jeweils eben ausgebildet sind und eben aneinander anliegen. Man könnte insofern in diesen Ausgestaltungsformen auch von abgeflachten Oberflächenbereichen der Rohrwandung sprechen. Außerhalb dieser angepassten Oberflächenbereichen können die Rohrwandungen beliebige andere Formen aufweisen, z.B. können sie bogenförmig oder dergleichen in diesen Bereichen ausgestaltet sein. Z.B. ist es möglich, eine Rohrwandung mit ursprünglich kreisförmigem Querschnitt so umzuformen, dass in ihr der oder die angepassten Oberflächenbereiche, z.B. eben, ausgebildet werden.

In einem Querschnitt orthogonal zu einer Längserstreckung der Rohrwandung gesehen, beträgt die Breite des angepassten Oberflächenbereichs günstigerweise zumindest 25%, vorzugsweise zumindest 50%, der Gesamtbreite der Rohrwandung. Die Gesamtbreite der Rohrwandung wird dabei von außen gemessen, es geht also um den Außen- nicht um den Innendurchmesser des Wärmetauscherrohres.

Insbesondere dann, wenn die Rohrwandung des Wärmetauscherrohres und die Deckplatten aus verschiedenem Material bestehen, aber auch sonst, kann vorgesehen sein, dass der angepasste Oberflächenbereich der Rohrwandung und der Bereich der Deckplatte, an dem dieser angepasste Oberflächenbereich der Rohrwandung anliegt, gegeneinander verschiebbar aneinander anliegen. Dies ermöglicht es, verschiedene thermische Ausdehnungen der Rohrwandung und der Deckplatte auszugleichen, ohne dass es hierdurch zu Spannungen innerhalb der Wärmetauschervorrichtung kommt und ohne dass hierdurch die Wärmeübertragung zwischen der Rohrwandung und der Deckplatte negativ beeinträchtigt wird.

Auch wenn dies nicht zwingend notwendig ist, so sehen besonders bevorzugte Ausgestaltungsformen der erfindungsgemäßen Wärmetauschervorrichtung dennoch vor, dass ein Zwischenraum zwischen den Deckplatten außerhalb des Wärmetauscherrohres zumindest teilweise mit einem Schaumkörper gefüllt ist. Der Schaumkörper kann hierbei verschiedene Aufgaben erfüllen. Zum einen kann er die gesamte Wärmetauschervorrichtung und damit insbesondere auch die Deckplatten und das Wärmetauscherrohr stabilisieren. Zum anderen kann er als Isoliermaterial zwischen den Deckplatten dienen. Vor allem kann er aber auch dazu verwendet werden, die Deckplatten aneinander zu befestigen. In diesem Zusammenhang sehen besonders bevorzugte Ausgestaltungsformen der Erfindung vor, dass die Deckplatten mittels des Schaumkörpers miteinander verklebt sind. Dieses Verkleben von Deckplatten und Schaumkörper kann durch Auftragen von Klebstoff erfolgen. Es ist aber genauso gut denkbar, dass das Verkleben der Deckplatten mit dem Schaumkörper gleich beim Aufschäumen des Schaumkörpers und damit durch den Schaumkörper selbst erfolgt. Der Schaumkörper kann aus verschiedensten, beim Stand der Technik an sich bekannten Schäumen bestehen. Besonders bevorzugt besteht er aus aufschäumbarem Material wie z.B. aufschäumbarem Kunststoff. Bevorzugt ist hier z.B. Polystyrol oder Polyurethan zu nennen.

Insbesondere, wenn der Schaumkörper durch ein Aufschäumen in einem Zwischenraum zwischen den Deckplatten ausgebildet wird, sehen bevorzugte Ausgestaltungsformen zur Begrenzung des Zwischenraums zwischen den Deckplatten vor, dass der Zwischenraum zwischen den Deckplatten zu den Seiten hin, vorzugsweise von abgekanteten Flanken der Deckplatten, geschlossen ist. Im Falle der abgekanteten Flanken bestehen die Seitenteile also aus abgekanteten Bereichen der Deckplatten. Natürlich könnten auch gesonderte Seitenverschlüsse zwischen den Deckplatten angebracht sein.

Wie eingangs bereits erläutert, bezieht sich die Erfindung nicht nur auf eine Wärmetauschervorrichtung an sich sondern auch auf ein Verfahren zur Herstellung einer Wärmetauschervorrichtung. Dabei handelt es sich bei der Wärmetauschervorrichtung insbesondere um eine solche der oben genannten Art. Ein erfindungsgemäßes Verfahren zur Herstellung einer Wärmetauschervorrichtung, insbesondere gemäß der oben genannten Art, mit einer ersten Deckplatte und zumindest einer zweiten Deckplatte, wobei zwischen den Deckplatten zumindest ein Wärmetauscherrohr mit einer Rohrwandung angeordnet wird, sieht erfindungsgemäß vor, dass das Wärmetauscherrohr zwischen die Deckplatten gelegt wird, anschließend die Deckplatten mit einer Presse zusammengedrückt werden und dann im zusammengedrückten Zustand Schaum zur Ausbildung eines bzw. des Schaumkörpers in einen bzw. den Zwischenraum zwischen den Deckplatten im Bereich außerhalb des Wärmetauscherrohres eingebracht wird und dort aushärtet. In anderen Worten ist somit vorgesehen, dass die Deckplatten während des Aufschäumens des Schaumes im Zwischenraum mittels der Presse unter einem vorgegebenen Druck in ihrer Position gehalten werden. Besonders bevorzugt ist dabei vorgesehen, dass die Deckplatten mittels des Aushärtens des Schaumes miteinander verklebt werden. Alternativ wäre es allerdings auch denkbar, den Schaum im bereits ausgehärteten Zustand mit den Deckplatten zu verkleben. Das Wärmetauscherrohr kann bereits mit dem oder den in seiner bzw. ihrer Form an die Deckplatte angepassten Oberflächenbereich(en) zwischen die Deckplatten gelegt werden. Alternativ oder zusätzlich ist es aber auch möglich, das Wärmetauscherrohr zur Ausbildung des oder der in seiner Form an die Deckplatte angepassten Oberflächenbereichs oder Oberflächenbereiche beim Zusammendrücken der Deckplatten mit der Presse umzuformen.

Weitere Merkmale und Einzelheiten bevorzugter Ausgestaltungsformen einer erfindungsgemäßen Wärmetauschervorrichtung und auch eines erfindungsgemäßen Herstellungsverfahrens werden nachfolgend anhand der Figurenbeschreibung erläutert. Es zeigen:
Fig. 1 eine Explosionsdarstellung zu einem ersten erfindungsgemäßen Ausführungsbesipiel einer Wärmetauschervorrichtung;
Fig. 2 bis 5 Schnittdarstellungen zu dem erfindungsgemäßen ersten Ausführungsbeispiel einer Wärmetauschervorrichtung und dessen Herstellung;
Fig. 6 bis 9 ein zweites Ausführungsbeispiel einer erfindungsgemäßen Wärmetauschervorrichtung sowie verschiedene Schritte zu deren Herstellung ebenfalls in einem Vertikalschnitt.

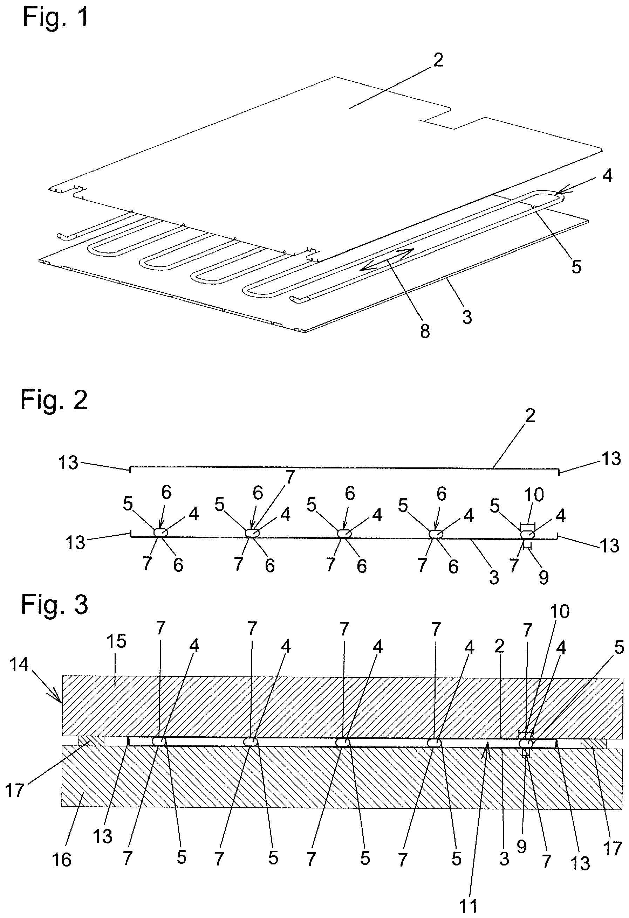

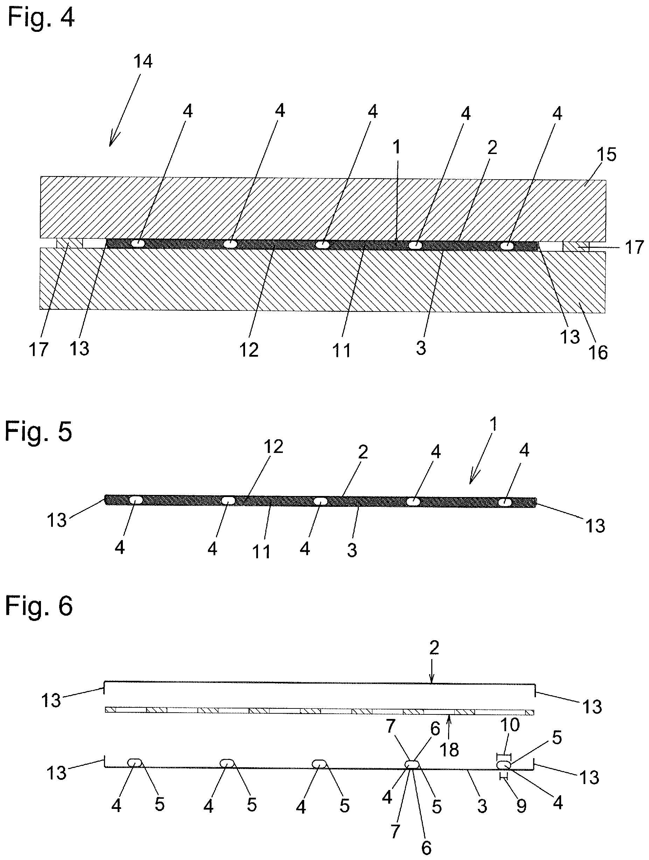

Fig. 1 zeigt in einer Explosionsdarstellung die erste Deckplatte 2 und die zweite Deckplatte 3 mit einem dazwischen angeordneten, hier mäanderförmig, ausgebildeten Wärmetauscherrohr 4, welches die Rohrwandung 5 aufweist. Das Wärmetauscherrohr 4 ist abgesehen von den umgebogenen Bereichen des Mäanders in der Längserstreckungsrichtung 8 längserstreckt. Fig. 2 zeigt einen Vertikalschnitt in einer Schnittebene orthogonal zu der Längserstreckung 8. Auch die anderen Fig. 3 bis 9 zeigen jeweils Vertikalschnitte in einer solchen Schnittebene. In Fig. 2 sind zunächst gut die abgekanteten Flanken 13 der ersten Deckplatte 2 und der zweiten Deckplatte 3 zu sehen, welche im zusammengefügten Zustand den Zwischenraum 11 zwischen den Deckplatten 2 und 3 seitlich abschließen und begrenzen. In dem ersten hier gezeigten Ausführungsbeispiel gemäß der Fig. 2 bis 5 sind die jeweils den Deckplatten 2 und 3 zugewandten Seiten 6 der Rohrwandung 5 mit einem in seiner Form an die Deckplatten 2 und 3 angepassten Oberflächenbereich 7 ausgestattet. Diese angepassten Oberflächenbereiche 7 liegen in der fertigen Wärmetauschervorrichtung 1 jeweils flächig und direkt an den Deckplatten 2 und 3 an, wie dies z.B. in Fig. 5 gut zu sehen ist. In dem hier gezeigten ersten Ausführungsbeispiel gemäß der Fig. 2 bis 5 sind diese angepassten Oberflächenbereiche 7 der Rohrwandung 5 jeweils eben ausgebildet. Dies entspricht der Form der Deckplatte 2 in den Bereichen, an denen diese angepassten Oberflächenbereiche 7 der Rohrwandung 5 anliegen. Hierdurch wird erreicht, dass die angepassten Oberflächenbereiche 7 der Rohrwandung und die jeweiligen Deckplatten 2 und 3 jeweils flächig aneinander anliegen. Die Breite 9 dieser angepassten Oberflächenbereiche 7 beträgt, wie eingangs bereits dargelegt, günstigerweise zumindest 25%, vorzugsweise zumindest 50%, der Gesamtbreite 10 der Rohrwandung 5. Außerhalb der angepassten, hier ebenen Oberflächenbereiche 7 kann die Rohrwandung 5 beliebige, z.B. wie hier gekrümmte Formen haben. Es sind aber auch eckige oder sonstwie geformte Querschnitte der Wärmetauscherrohre 4 bzw. von deren Rohrwandung 5 denkbar. In Fig. 3 ist das Wärmetauscherrohr 4 bereits zwischen die beiden Deckplatten 2 und 3 gelegt. Mit der Presse 14 bzw. deren Pressenoberteil 15 und deren Pressenuntertell 16 werden die Deckplatten 2 und 3 zusammengedrückt. Die Distanzstücke 17 geben dabei den Abstand der Deckplatten 2 und 3 vor und verhindern, dass die beiden Deckplatten 2 und 3 zu weit zusammengedrückt werden. Die Flanken 13 schließen den Zwischenraum 11, welcher sich zwischen den beiden Deckplatten 2 und 3 und außerhalb der Wärmetauscherrohre 4 erstreckt, seitlich nach außen ab.

Das erfindungsgemäße Verfahren sieht nun vor, dass in diesem zusammengedrückten Zustand gemäß Fig. 3 Schaum zur Ausbildung des Schaumkörpers 12 in den Zwischenraum 11 zwischen den Deckplatten 2 und 3 im Bereich außerhalb des Wärmetauscherrohres 4 eingebracht wird und dort aushärtet. Die Presse 14 mit ihrem Pressenoberteil 15 und ihrem Pressenuntertell 16 kann dabei die Deckplatten 2 und 3 abstützen und mit einer gewissen Vorspannung in Richtung aufeinander zu versehen. Dies stellt auch sicher, dass der Abstand zwischen den Deckplatten 2 und 3 auch im Endprodukt den gewünschten Wert hat. Während in Fig. 3 der Zwischenraum 11 noch leer also vor dem Einbringen des Schaumes dargestellt ist, zeigt Fig. 4 den Zustand, in dem der Schaumkörper 12 den Zwischenraum 11 außerhalb des Wärmetauscherrohres 4 aber innerhalb der durch die Deckplatten 2 und 3 und die Flanken 13 gegebenen Außengrenzen füllt. Nach dem Aushärten kann die Presse 14 geöffnet und die fertige Wärmetauschervorrichtung 1 aus dem Bereich zwischen Pressenoberteil 15 und Pressenuntertell 16 entnommen werden. Fig. 5 zeigt, wie gesagt, einen Querschnitt orthogonal zur Längserstreckung 8 der Wärmetauscherrohre 4 durch das fertige Endprodukt in Form der erfindungsgemäßen Wärmetauschervorrichtung 1 des ersten Ausführungsbeispiels.

Die Fig. 6 bis 9 zeigen nun zu den Fig. 2 bis 5 analoge Darstellungen, wobei allerdings ein zweites erfindungsgemäßes Ausführungsbeispiel gezeigt ist.

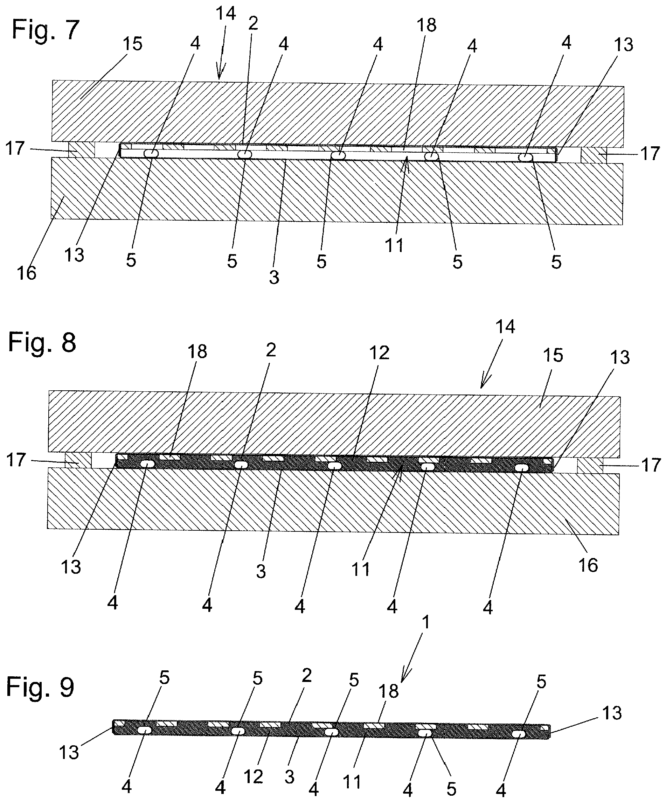

Während beim ersten Ausführungsbeispiel das Wärmetauscherrohr 4 auf einander gegenüberliegenden Seiten 6 jeweils mit den in ihrer Form angepassten Oberflächen 7 an jeweils einer der beiden Deckplatten 2 und 3 anliegt, wird im zweiten Ausführungsbeispiel mittels einer Zwischenschicht 18 erreicht, dass das Wärmetauscherrohr 4 nur auf einer Seite 6 an der zweiten Deckplatte 3 anliegt, während sich zwischen der ersten Deckplatte 2 und dem Wärmetauscherrohr 4 die Zwischenschicht 18 befindet. Die Zwischenschicht 18 kann, wie hier z.B. gitterförmig, aber auch anders ausgebildet sein. Sie kann wärmeisolierend aber auch wärmeleitend ausgebildet sein. Dies kann je nach Anwendung der erfindungsgemäßen Wärmetauschervorrichtung 1 entsprechend gewählt werden. Abgesehen von diesem genannten Unterschied entspricht das zweite Ausführungsbeispiel gemäß der Fig. 6 bis 9 im Wesentlichen dem ersten Ausführungsbeispiel gemäß der Fig. 2 bis 5, sodass auf weitere Details dieser erfindungsgemäßen Wärmetauschervorrichtung 1 und auch des Verfahrens zu ihrer Herstellung auf das oben Gesagte verwiesen werden kann. Fig. 9 zeigt wiederum einen Vertikalschnitt durch das fertige Produkt, also die Wärmetauschervorrichtung 1 gemäß des zweiten erfindungsgemäßen Ausführungsbeispiels.

### Legende

### zu den Hinweisziffern:

- 1: Wärmetauschervorrichtung
- 2: Deckplatte
- 3: Deckplatte
- 4: Wärmetauscherrohr
- 5: Rohrwandung
- 6: Seite
- 7: Oberflächenbereich
- 8: Längserstreckung
- 9: Breite
- 10: Gesamtbreite
- 11: Zwischenraum
- 12: Schaumkörper
- 13: Flanke
- 14: Presse
- 15: Pressenoberteil
- 16: Pressenuntertell
- 17: Distanzstück
- 18: Zwischenschicht

## Patentansprüche

1. Wärmetauschervorrichtung (1) mit einer ersten Deckplatte (2) und zumindest einer zweiten Deckplatte (3), wobei zwischen den Deckplatten (2, 3) zumindest ein Wärmetauscherrohr (4) mit einer Rohrwandung (5) angeordnet ist, **dadurch gekennzeichnet, dass** die Rohrwandung (5) des Wärmetauscherrohrs (4) auf zumindest einer Seite (6), welche einer der Deckplatten (2, 3) zugewandt ist, einen in seiner Form an die Deckplatte (2, 3) angepassten Oberflächenbereich (7) aufweist, welcher flächig, vorzugsweise direkt, an der Deckplatte (2, 3) anliegt.

2. Wärmetauschervorrichtung (1) nach Anspruch 1, **dadurch gekennzeichnet, dass** der angepasste Oberflächenbereich (7) der Rohrwandung (5) und ein Bereich der Deckplatte (2, 3), an dem dieser angepasste Oberflächenbereich (7) der Rohrwandung (5) anliegt, jeweils eben ausgebildet sind und eben aneinander anliegen.

3. Wärmetauschervorrichtung (1) nach Anspruch 1 oder 2, **dadurch gekennzeichnet, dass** in einem Querschnitt orthogonal zu einer Längserstreckung (8) der Rohrwandung (5) gesehen, die Breite (9) des angepassten Oberflächenbereichs (7) zumindest 25%, vorzugsweise zumindest 50%, der Gesamtbreite (10) der Rohrwandung (5) beträgt.

4. Wärmetauschervorrichtung (1) nach einem der Ansprüche 1 bis 3, **dadurch gekennzeichnet, dass** der angepasste Oberflächenbereich (7) der Rohrwandung (5) und der Bereich der Deckplatte (2, 3), an dem dieser angepasste Oberflächenbereich (7) der Rohrwandung (5) anliegt, gegeneinander verschiebbar aneinander anliegen.

5. Wärmetauschervorrichtung (1) nach einem der Ansprüche 1 bis 4, **dadurch gekennzeichnet, dass** ein Zwischenraum (11) zwischen den Deckplatten (2, 3) außerhalb des Wärmetauscherrohres (4) zumindest teilweise mit einem Schaumkörper (12) gefüllt ist.

6. Wärmetauschervorrichtung (1) nach Anspruch 5, **dadurch gekennzeichnet, dass** der Zwischenraum (11) zwischen den Deckplatten (2, 3) zu den Seiten hin, vorzugsweise von abgekanteten Flanken (13) der Deckplatten (2, 3), geschlossen ist.

7. Wärmetauschervorrichtung (1) nach einem der Ansprüche 5 oder 6, **dadurch gekennzeichnet, dass** die Deckplatten (2, 3) mittels des Schaumkörpers (12) miteinander verklebt sind.

8. Verfahren zur Herstellung einer Wärmetauschervorrichtung (1), insbesondere nach einem der Ansprüche 1 bis 6, mit einer ersten Deckplatte (2) und zumindest einer zweiten Deckplatte (3), wobei zwischen den Deckplatten (2, 3) zumindest ein Wärmetauscherrohr (4) mit einer Rohrwandung (5) angeordnet wird, **dadurch gekennzeichnet, dass** das Wärmetauscherrohr (4) zwischen die Deckplatten (2, 3) gelegt wird, anschließend die Deckplatten (2, 3) mit einer Presse (14) zusammengedrückt werden und dann im zusammengedrückten Zustand Schaum zur Ausbildung eines bzw. des Schaumkörpers (12) in einen bzw. den Zwischenraum (11) zwischen den Deckplatten (2, 3) im Bereich außerhalb des Wärmetauscherrohres (4) eingebracht wird und dort aushärtet.

9. Verfahren nach Anspruch 8, **dadurch gekennzeichnet, dass** die Deckplatten (2, 3) mittels des Aushärtens des Schaumes miteinander verklebt werden.

10. Verfahren nach Anspruch 8 oder 9, **dadurch gekennzeichnet, dass** das Wärmetauscherrohr (4) bereits mit in seiner Form an die Deckplatte (2, 3) angepasstem Oberflächenbereich (7) zwischen die Deckplatten (2, 3) gelegt wird, und/oder dass das Wärmetauscherrohr (4) zur Ausbildung des in seiner Form an die Deckplatte (2, 3) angepasstem Oberflächenbereichs (7) beim Zusammendrücken der Deckplatten (2, 3) mittels der Presse (14) umgeformt wird.
